# EUROPEAN PATENT APPLICATION

(11) **EP 4 549 763 A1**
(43) Date of publication of application: **07.05.2025**
(21) Application number: 23831105.4
(22) Date of filing: 14.06.2023
(51) Int. Cl.: F16C 17/04, F16J 15/34

(54) **SLIDING COMPONENT**

(30) Priority: 30.06.2022 JP 2022106344
(71) Applicant: Eagle Industry Co., Ltd., Minato-ku Tokyo 105-8587 (JP)
(72) Inventor: FUKUDA, Shogo, Tokyo 105-8587 (JP); IMURA, Tadatsugu, Tokyo 105-8587 (JP); NISHIZAWA, Keisuke, Tokyo 105-8587 (JP)
(74) Representative: WSL Patentanwälte Partnerschaft mbB
(86) International application number: PCT/JP2023/022116
(87) International publication number: WO 2024/004657

(57) **Abstract**

There is provided a sliding component capable of preventing poor lubrication between sliding surfaces at low relative rotation speed. In a sliding component including a pair of sliding rings 10 and 20 which rotate relative to each other and which partitions a first fluid space S1 and a second fluid space S2 off from each other, at least one of sliding surfaces 11 and 21 of the pair of sliding rings include a specific dynamic pressure generation groove 16 that is provided on a first fluid space S1 side, and that generates a dynamic pressure using a first fluid F, a dynamic pressure generation groove 15 that is provided on a second fluid space S2 side with respect to the specific dynamic pressure generation groove 16, and that generates a dynamic pressure using a second fluid A, a communication groove 131 communicating with the first fluid space S1, a circumferential groove 132 provided on the second fluid space S2 side with respect to the specific dynamic pressure generation groove 16, and extending from the communication groove 131 in a circumferential direction, and a first fluid introduction groove 14 that is provided on the second fluid space S2 side with respect to the circumferential groove 132, and that introduces the first fluid F.

## Description

### {TECHNICAL FIELD}

The present invention relates to a sliding component including a pair of sliding rings that rotate relative to each other, for example, a sliding component used in a shaft sealing device that seals a rotating shaft of a rotating machine in an automobile, a general industrial machine, or other seal fields, or a sliding component used in a bearing of a machine in an automobile, a general industrial machine, or other bearing fields.

### {BACKGROUND ART}

For example, a mechanical seal as a shaft sealing device that prevents a leakage of a sealed fluid includes a pair of sliding members having an annular shape which rotate relative to each other and of which sliding surfaces slide on each other. In such a mechanical seal, in recent years, there has been a desire to reduce the loss of energy due to sliding for environmental measures and the like.

For example, in a mechanical seal illustrated in Patent Citation 1, a fluid introduction groove, a Rayleigh step, and a dynamic pressure generation groove are provided on a sliding surface of a rotation side seal ring. The fluid introduction groove is a deep groove communicating with a liquid space on a radially outer side, and extending in a radial direction. The Rayleigh step is a shallow groove communicating with the fluid introduction groove, and extending in a circumferential direction toward a downstream side in a rotation direction. The dynamic pressure generation groove is a spiral groove communicating with a gas space on a radially inner side, and extending toward the radially outer side while being inclined toward the downstream side in the rotation direction.

In this mechanical seal, when the rotation side seal ring rotates at low speed, a liquid is introduced into a gap between the sliding surfaces from the fluid introduction groove, and liquid lubrication is performed between the sliding surfaces, so that slidability is improved. In addition, when the rotation side seal ring rotates at high speed, such as during steady operation, a gas is introduced from a radially inner end portion of the dynamic pressure generation groove, and a dynamic pressure is generated in the vicinity of the closed end portion. Accordingly, the sliding surfaces are slightly separated from each other, and gas lubrication is performed between the sliding surfaces, so that slidability is improved.

### {CITATION LIST}

### {Patent Literature}

Patent Citation 1: WO 2016/167262 A (Page 13, FIG. 7)

### {SUMMARY OF INVENTION}

### {Technical Problem}

In the mechanical seal as in Patent Citation 1, the pressure in the gas space may change and become higher than the pressure in the liquid space. In such a case, when the rotation side seal ring rotates at low speed, a large amount of the gas flows into the gap between the sliding surfaces from the gas space, and the liquid introduced into the gap between the sliding surfaces is pushed back toward a liquid space side by the gas, thereby causing poor lubrication between the sliding surfaces, which is a risk.

The present invention has been made in view of such problems, and an object of the present invention is to provide a sliding component capable of preventing poor lubrication between the sliding surfaces at low relative rotation speed.

### {Solution to Problem}

In order to solve the foregoing problems, a sliding component according to the present invention is a sliding component including a pair of sliding rings which rotate relative to each other and which partitions a first fluid space and a second fluid space off from each other. At least one of Sliding surfaces of the pair of sliding rings include a specific dynamic pressure generation groove that is provided on a first fluid space side, and that generates a dynamic pressure using a first fluid, a dynamic pressure generation groove that is provided on a second fluid space side with respect to the specific dynamic pressure generation groove, and that generates a dynamic pressure using a second fluid, a communication groove communicating with the first fluid space, a circumferential groove provided on the second fluid space side with respect to the specific dynamic pressure generation groove, and extending from the communication groove in a circumferential direction, and a first fluid introduction groove that is provided on the second fluid space side with respect to the circumferential groove, and that introduces the first fluid. According to the aforesaid feature of the present invention, at low relative rotation speed, the amount of the first fluid supplied into a gap between the sliding surfaces can be ensured in a wide range of the circumferential groove in the circumferential direction, and the movement of the second fluid toward the first fluid space side can be suppressed by the first fluid supplied into the gap between the sliding surfaces from the first fluid introduction groove. Accordingly, poor lubrication between the sliding surfaces at low relative rotation speed can be prevented.

It may be preferable that the circumferential groove and the first fluid introduction groove communicate with each other. According to this preferable configuration, the first fluid can be introduced into the first fluid introduction groove from the circumferential groove.

It may be preferable that the communication groove extends from the first fluid space toward the circumferential groove in a radial direction. According to this preferable configuration, excessive introduction of the first fluid into the communication groove and the circumferential groove from the first fluid space when the pair of sliding rings rotate relative to each other can be suppressed.

It may be preferable that the communication groove is inclined and extend from the first fluid space toward the circumferential groove in a rotation direction. According to this preferable configuration, it is easy to smoothly introduce the first fluid into the communication groove and the circumferential groove from the first fluid space when the pair of sliding rings rotate relative to each other.

It may be preferable that an annular groove is formed between the first fluid introduction groove and the dynamic pressure generation groove. According to this preferable configuration, since the first fluid and the second fluid move along the annular groove, an interface between the first fluid and the second fluid can be stabilized.

It may be preferable that the circumferential groove has an annular shape. According to this preferable configuration, the amount of the first fluid supplied into the gap between the sliding surfaces from the circumferential groove can be ensured, and the second fluid can be prevented from moving further toward the first fluid space side from the circumferential groove.

It may be preferable that the first fluid introduction groove is a spiral groove. According to this preferable configuration, a dynamic pressure can be generated at a closed end portion of the first fluid introduction groove. In addition, since the first fluid introduction grooves can be provided close to each other in the circumferential direction, the degree of freedom in design is high.

It may be preferable that the dynamic pressure generation groove is a spiral groove, and a closed end portion of the dynamic pressure generation groove and a closed end portion of the first fluid introduction groove face each other. According to this preferable configuration, the movement of the second fluid toward the first fluid space side can be effectively suppressed by a dynamic pressure generated at the closed end portion of the first fluid introduction groove.

It may be preferable that the first fluid is a liquid, and the second fluid is a gas. According to this preferable configuration, liquid lubrication can be performed at low relative rotation speed, and gas lubrication can be performed at high relative rotation speed.

### {BRIEF DESCRIPTION OF DRAWINGS}

FIG. 1 is a longitudinal sectional view illustrating one example of a mechanical seal as a sliding component according to a first embodiment of the present invention.
FIG. 2 is a view of a sliding surface of a stationary seal ring in the first embodiment when viewed in an axial direction.
FIG. 3 is an enlarged view of the sliding surface of the stationary seal ring in the first embodiment when viewed in the axial direction, and is a view schematically describing an operation at low relative rotation speed.
FIG. 4 is an enlarged view of a sliding surface of a stationary seal ring included in a sliding component according to a second embodiment of the present invention when viewed in the axial direction.
FIG. 5 is a view of a sliding surface of a stationary seal ring included in a sliding component according to a third embodiment of the present invention when viewed in the axial direction.
FIG. 6 is an enlarged view of a sliding surface of a stationary seal ring included in a sliding component according to a fourth embodiment of the present invention when viewed in the axial direction.
FIG. 7 is an enlarged view of a sliding surface of a stationary seal ring included in a sliding component according to a fifth embodiment of the present invention when viewed in the axial direction.
FIG. 8 is an enlarged view of a sliding surface of a stationary seal ring included in a sliding component according to a sixth embodiment of the present invention when viewed in the axial direction.
FIG. 9 is an enlarged view of a sliding surface of a stationary seal ring included in a sliding component according to a seventh embodiment of the present invention when viewed in the axial direction.

### {DESCRIPTION OF EMBODIMENTS}

Modes for implementing a sliding component according to the present invention will be described below based on embodiments.

### {First embodiment}

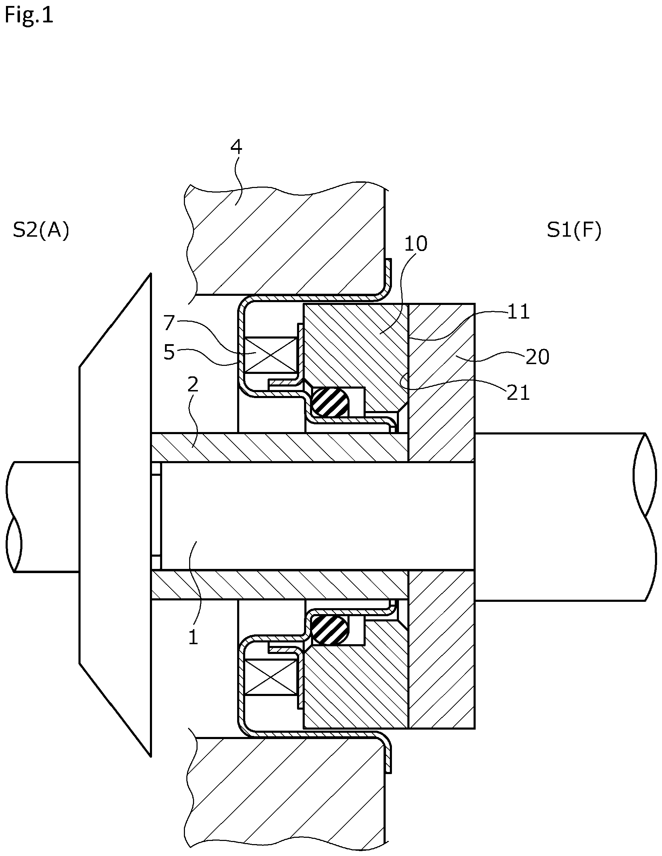

A sliding component according to a first embodiment of the present invention will be described with reference to FIGS. 1 to 3. Incidentally, in the present embodiment, a liquid F as a sealed fluid exists in an outer space S1 as a first fluid space of a mechanical seal, and a gas A exists in an inner space S2 as a second fluid space. Namely, in the present embodiment, a first fluid is the liquid F, and a second fluid is the gas A. In addition, for convenience of description, in the drawings, dots may be added to grooves and the like formed on a sliding surface.

The mechanical seal illustrated in FIG. 1 is an inside mechanical seal that seals the liquid F in the outer space S1 which tends to leak from a radially outer side toward a radially inner side of the sliding surfaces, and that allows the gas A in the inner space S2 to pass.

The mechanical seal mainly includes a rotating seal ring 20 as the other sliding ring, and a stationary seal ring 10 as one sliding ring. The rotating seal ring 20 has an annular shape, is attached to a rotating shaft 1 using a sleeve 2, and is rotatable together with the rotating shaft 1.

The stationary seal ring 10 has an annular shape, and is provided on a seal cover 5 fixed to a housing 4 of an attached device, to be non-rotatable and movable in an axial direction. The stationary seal ring 10 is biased in the axial direction by an elastic member 7, so that a sliding surface 11 of the stationary seal ring 10 and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (as an example of hard material) or a combination of SiC and carbon (as an example of soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (e.g., coating materials), composite materials, and the like can also be applied.

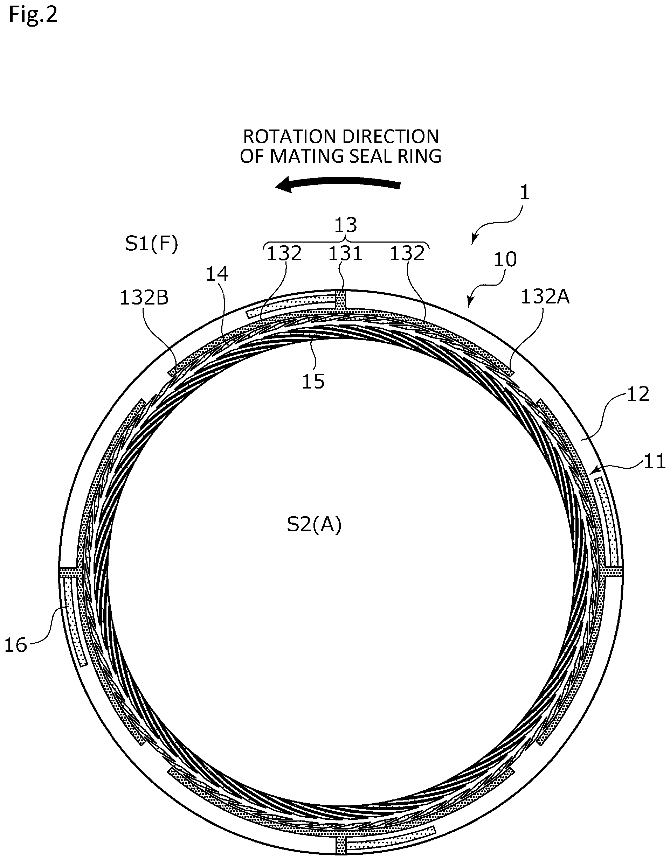

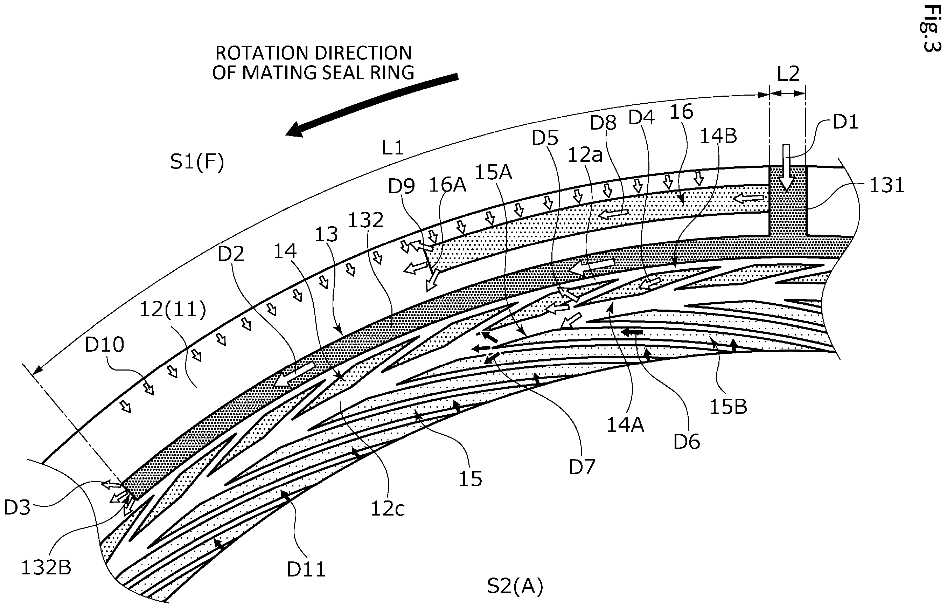

As illustrated in FIGS. 2 and 3, the rotating seal ring 20 slides counterclockwise relative to the stationary seal ring 10 as indicated by a solid arrow.

The sliding surface 11 of the stationary seal ring 10 is provided with a plurality of deep grooves 13 (4 in the present embodiment), a plurality of liquid introduction grooves 14 (60 in the present embodiment) as first fluid introduction grooves, a plurality of dynamic pressure generation grooves 15 (60 in the present embodiment), and Rayleigh steps 16 (4 in the present embodiment) as specific dynamic pressure generation grooves.

In addition, portions of the sliding surface 11 other than the deep grooves 13, the liquid introduction grooves 14, and the dynamic pressure generation grooves 15 are lands 12 forming flat surfaces disposed on the same plane. The flat surfaces of the lands 12 function as a sliding surface that substantially slides on the sliding surface 21 of the rotating seal ring 20.

Each deep groove 13 includes a communication groove portion 131 as a communication groove and a circumferential groove portion 132 as a circumferential groove, and has a substantially T shape when viewed in the axial direction. The communication groove portion 131 communicates with the outer space S1, and extends from an outer edge of the sliding surface 11 in a radially inward direction.

The circumferential groove portion 132 extends concentrically with the sliding surface 11 from a radially inner end of the communication groove portion 131 toward both sides in a circumferential direction. The communication groove portion 131 and the circumferential groove portion 132 have the same depth.

A circumferential length L1 of each circumferential groove portion 132 is larger than a circumferential length L2 of the communication groove portion 131 (L1 > L2).

Each liquid introduction groove 14 is provided on the radially inner side of the circumferential groove portion 132 to be separated from the circumferential groove portion 132 via a land 12a, and does not communicate with the circumferential groove portion 132. The liquid introduction groove 14 extends in an arcuate shape while being inclined with a counterclockwise component from the radially outer side toward the radially inner side. Namely, the liquid introduction groove 14 is a spiral groove.

The liquid introduction groove 14 is formed with a constant depth in the circumferential direction. The depth of the liquid introduction groove 14 is shallower than the depth of the deep groove 13. Incidentally, the liquid introduction groove 14 may have the function of introducing the liquid to the radially inner side, is not limited to extending in an arcuate shape while being inclined, and may extend linearly. In addition, the liquid introduction groove 14 of the present embodiment introduces the liquid to the radially inner side, and generates a positive pressure at a closed end portion 14A.

Each dynamic pressure generation groove 15 communicates with the inner space S2. The dynamic pressure generation groove 15 extends in an arcuate shape while being inclined with a counterclockwise component from the radially outer side toward the radially inner side. Namely, the dynamic pressure generation groove 15 is a spiral groove. Incidentally, the dynamic pressure generation groove 15 may not communicate with the inner space S2.

The dynamic pressure generation groove 15 extends in an arcuate shape in the circumferential direction while being inclined with a counterclockwise component from the radially inner side toward the radially outer side, and is formed with a constant depth. The depth of the dynamic pressure generation groove 15 is shallower than the depth of the deep groove 13. Incidentally, the dynamic pressure generation groove 15 may have the function of guiding the gas toward the radially outer side to generate a positive pressure at a closed end portion 15A, is not limited to extending in an arcuate shape while being inclined, and may extend linearly.

The closed end portion 14A on the radially inner side of the liquid introduction groove 14 and the closed end portion 15A on the radially outer side of the dynamic pressure generation groove 15 are separated from each other in a radial direction by a land 12c, and face each other.

Each Rayleigh step 16 extends concentrically with the sliding surface 11 counterclockwise from the communication groove portion 131, and is disposed on the radially outer side of the circumferential groove portion 132 having an annular shape. The Rayleigh step 16 is shallower than the deep groove 13, and has a constant depth in the circumferential direction. Incidentally, the Rayleigh step 16 may not communicate with the communication groove portion 131.

Next, an operation of the stationary seal ring 10 and the rotating seal ring 20 during relative rotation will be described with reference to FIG. 3. Incidentally, in FIG. 3, the flow of the liquid F and the flow of the gas A are illustrated by white arrows and black arrows, respectively.

First, when the rotating seal ring 20 is not in rotation and is stopped, the liquid F flows into the deep groove 13, the liquid introduction groove 14, and the Rayleigh step 16 provided on an outer space S1 side with respect to the land 12c. In addition, the gas A flows into the dynamic pressure generation groove 15 provided on an inner space S2 side with respect to the land 12c.

Incidentally, during non-rotation, since the stationary seal ring 10 is biased to the rotating seal ring 20 side by the elastic member 7, the sliding surfaces 11 and 21 are in contact with each other, and there is substantially no leakage of the liquid F between the sliding surfaces 11 and 21 into the inner space S2.

As illustrated in FIG. 3, during low-speed rotation when the rotating seal ring 20 starts to rotate relative to the stationary seal ring 10, the liquid F in the deep groove 13, the liquid introduction groove 14, and the Rayleigh step 16, mainly, the surface layer of the liquid F follows and moves in a rotation direction of the rotating seal ring 20 due to shearing with the sliding surface 21.

According to this configuration, as illustrated by arrow D2, the liquid F in the circumferential groove portion 132 moves from an end portion 132A (refer to FIG. 2) on an upstream side of the relative rotation toward an end portion 132B on a downstream side of the relative rotation.

As illustrated by arrow D3, the liquid F that has moved toward the end portion 132B of the circumferential groove portion 132 flows into a gap between the sliding surfaces 11 and 21 from the end portion 132B and the vicinity thereof. Incidentally, the deep groove 13 has a depth that does not allow a positive pressure to be generated at the end portion 132B and in the vicinity thereof.

In addition, as illustrated by arrow D1, the liquid F in the outer space S1 is drawn into the circumferential groove portion 132 and the Rayleigh step 16 through the communication groove portion 131.

In addition, as illustrated by arrow D8, the liquid F in the Rayleigh step 16 moves toward a closed end portion 16A of the Rayleigh step 16. As illustrated by arrow D9, the liquid F that has moved toward the closed end portion 16A of the Rayleigh step 16 generates a positive pressure at the closed end portion 16A and in the vicinity thereof.

In addition, as illustrated by arrow D4, the liquid F in the liquid introduction groove 14 moves from a closed end portion 14B on the radially outer side toward the closed end portion 14A on the radially inner side. Incidentally, the liquid F between the sliding surfaces 11 and 21 is drawn into the liquid introduction groove 14 from around the closed end portion 14B.

As illustrated by arrow D5, the liquid F that has moved toward the closed end portion 14A of the liquid introduction groove 14 flows into the gap between the sliding surfaces 11 and 21 from the closed end portion 14A and the vicinity thereof.

In addition, the pressure of the liquid F in the liquid introduction groove 14 is increased at the closed end portion 14A and in the vicinity thereof. Namely, a positive pressure is generated at the closed end portion 14A of the liquid introduction groove 14 and in the vicinity thereof.

The sliding surfaces 11 and 21 are slightly separated from each other by the positive pressure generated at the closed end portion 14A of the liquid introduction groove 14 and in the vicinity thereof and the positive pressure generated at the closed end portion 16A of the Rayleigh step 16 and in the vicinity thereof. As illustrated by arrow D10, the liquid F flows into the gap between the sliding surfaces 11 and 21 from the outer space S1, and as illustrated by arrow D11, the gas A flows into the gap between the sliding surfaces 11 and 21 from the inner space S2.

In addition, as illustrated by arrow D6, the gas A in the dynamic pressure generation groove 15 moves from a closed end portion 15B on the radially inner side toward the closed end portion 15A on the radially outer side. Incidentally, the gas A between the sliding surfaces 11 and 21 is drawn into the dynamic pressure generation groove 15 from around the closed end portion 15B.

As illustrated by arrow D7, the gas A that has moved toward the closed end portion 15A of the dynamic pressure generation groove 15 flows into the gap between the sliding surfaces 11 and 21 from the closed end portion 15A and the vicinity thereof.

Incidentally, when the relative rotation between the rotating seal ring 20 and the stationary seal ring 10 is at low speed, the gas A is not sufficiently dense in the dynamic pressure generation groove 15 not to generate a high positive pressure, and a force to separate the sliding surfaces 11 and 21 from each other hardly acts.

The gas A that has flowed into the gap between the sliding surfaces 11 and 21 from the closed end portion 15A and the vicinity thereof is guided to move toward the radially outer side, but is pushed back in the radially inward direction by the positive pressure generated at the closed end portion 14A of the liquid introduction groove 14 and in the vicinity thereof.

In addition, although not illustrated, when the relative rotation speed of the rotating seal ring 20 increases, a large amount of the gas A moves from the closed end portion 15B of the dynamic pressure generation groove 15 toward the closed end portion 15A, and the pressure is increased at the closed end portion 15A and in the vicinity thereof. Namely, a positive pressure is generated at the closed end portion 15A of the dynamic pressure generation groove 15 and in the vicinity thereof.

At this time, the positive pressure generated at the closed end portion 15A of the dynamic pressure generation groove 15 and in the vicinity thereof is higher than the positive pressure generated at the closed end portion 14A of the liquid introduction groove 14 and in the vicinity thereof, so that the sliding surfaces 11 and 21 are further separated from each other compared to when relative rotation is at low speed.

In the mechanical seal of the present embodiment, during high-speed rotation, the sliding surfaces 11 and 21 are separated from each other to the extent that the liquid F in the deep groove 13 and the liquid introduction groove 14 hardly acts on the sliding surface 21. Therefore, finally, gas lubrication between the sliding surfaces 11 and 21 is performed by the gas A.

As described above, when the relative rotation between the stationary seal ring 10 and the rotating seal ring 20 is at low speed, the amount of the liquid F supplied into the gap between the sliding surfaces 11 and 21 can be ensured in a wide range of the circumferential groove portion 132 of the deep groove 13 in the circumferential direction. In addition, due to the liquid F supplied into the gap between the sliding surfaces 11 and 21 from the liquid introduction groove 14, the gas A supplied into the gap between the sliding surfaces 11 and 21 from the inner space S2 or the closed end portion 15A of the dynamic pressure generation groove 15 is pushed back in the radially inward direction.

For example, normally, the pressure of the liquid F in the outer space S1 is higher than the pressure of the gas A in the inner space S2, but the pressure of the gas A may be higher than the pressure of the liquid F. Even in such a case, since the liquid introduction groove 14 is provided on the radially outer side with respect to the closed end portion 15A of the dynamic pressure generation groove 15 to be separated from the closed end portion 15A, and the liquid introduction groove 14 draws in the liquid F from the radially outer side, the pushing out of the liquid F from the gap between the sliding surfaces 11 and 21 by the gas A is suppressed. Accordingly, poor lubrication between the sliding surfaces 11 and 21 at low relative rotation speed can be prevented.

In addition, the communication groove portion 131 extends in the radial direction from the outer space S1 toward the circumferential groove portion 132. According to this configuration, excessive introduction of the liquid F into the deep groove 13 from the outer space S1 when the relative rotation speed between the stationary seal ring 10 and the rotating seal ring 20 is high can be suppressed, and gas lubrication can be prevented from being inhibited.

In addition, since the liquid introduction groove 14 is a spiral groove, a dynamic pressure can be generated at the closed end portion 14A of the liquid introduction groove 14. For that reason, even when the gas A has a higher pressure than the liquid F, the gas A can be effectively pushed back toward the radially inner side.

Further, since the liquid introduction grooves 14 can be provided close to each other in the circumferential direction, the degree of freedom in design is high.

In addition, the dynamic pressure generation groove 15 is a spiral groove, and the closed end portion 15A of the dynamic pressure generation groove 15 and the closed end portion 14A of the liquid introduction groove 14 face each other. According to this configuration, the movement of the gas A toward the outer space S1 side can be effectively suppressed by the positive pressure generated at the closed end portion 14A of the liquid introduction groove 14.

In addition, at low relative rotation speed, liquid lubrication can be performed by the liquid F, and at high relative rotation speed, gas lubrication can be performed by the gas A.

Incidentally, in the present embodiment, the mode in which the deep groove 13 has a substantially T shape when viewed in the axial direction, which is formed by the communication groove portion 131 and the circumferential groove portion 132 has been provided as an example; however, the circumferential groove may be formed in an L shape when viewed in the axial direction, which extends from a radially inner end of the communication groove toward one side in the circumferential direction. In addition, the communication groove portion may extend further toward the radially inner side than the circumferential groove portion.

In addition, the circumferential groove portion 132 is not limited to extending in an arcuate shape, and may extend linearly.

In addition, in the present embodiment, the mode in which the liquid introduction groove 14 and the dynamic pressure generation groove 15 are spiral grooves that are inclined with a radial component and a circumferential component has been provided as an example; however, the present invention is not limited thereto, the liquid introduction groove 14 and the dynamic pressure generation groove 15 may be dimples having a rectangular shape, a circular shape, or the like when viewed in the axial direction, or may be Rayleigh steps or the like extending in the circumferential direction.

In addition, the liquid introduction groove 14 may be a deep groove that does not generate a positive pressure.

In addition, in the present embodiment, the mode in which the closed end portion 14A of the liquid introduction groove 14 and the closed end portion 15A of the dynamic pressure generation groove 15 are disposed to be separated from each other in the radial direction and to radially face each other has been provided as an example; however, the closed end portions of the liquid introduction groove and the dynamic pressure generation groove may be separated from each other in the radial direction without being aligned in the same radial line.

### {Second embodiment}

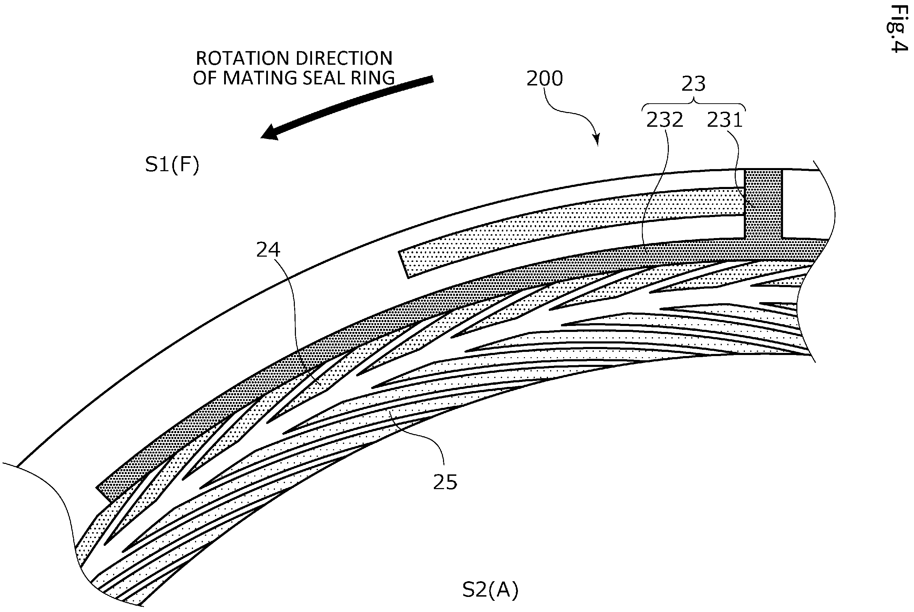

Next, a sliding component according to a second embodiment of the present invention will be described with reference to FIG. **4****.** Incidentally, the description of configurations that are the same as and overlap with the configurations of the first embodiment will be omitted.

As illustrated in FIG. 4, in a stationary seal ring 200 of the second embodiment, a radially outer end of a liquid introduction groove 24 communicates with a circumferential groove portion 232 of a deep groove 23. According to this configuration, since a large amount of the liquid F can be introduced into the liquid introduction groove 24 from the circumferential groove portion 232 of the deep groove 23, the liquid F can be reliably supplied into a gap between the sliding surfaces at low relative rotation speed, and liquid lubrication can be performed. In addition, even when the gas A has a higher pressure than the liquid F, the gas A can be reliably pushed back toward the radially inner side.

In addition, a dynamic pressure generation groove 25 communicates with the inner space S2 at a radially inner end thereof. According to this configuration, since the gas A can be supplied into the dynamic pressure generation groove 25 from the inner space S2, a positive pressure can be reliably generated at high relative rotation speed to separate the sliding surfaces from each other, and gas lubrication can be performed.

### {Third embodiment}

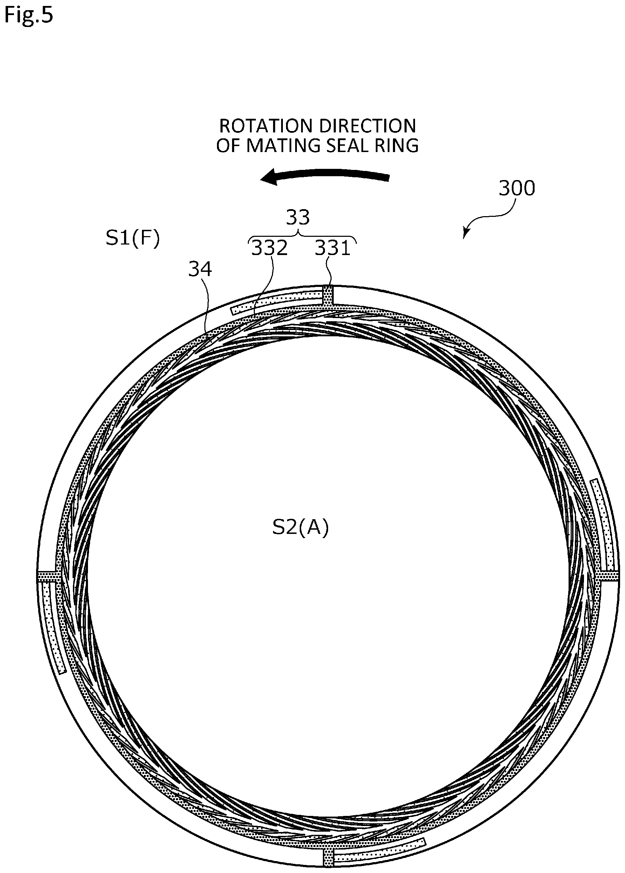

Next, a sliding component according to a third embodiment of the present invention will be described with reference to FIG. 5. Incidentally, the description of configurations that are the same as and overlap with the configurations of the second embodiment will be omitted.

As illustrated in FIG. 5, in a stationary seal ring 300 of the third embodiment, a circumferential groove portion 332 of a deep groove 33 has an annular shape. A communication groove portion 331 communicates with the circumferential groove portion 332.

In such a manner, since the circumferential groove portion 332 has an annular shape, the liquid F can be supplied into a gap between sliding surfaces over the entire circumference of a sliding surface 310 at low relative rotation speed, and the amount of supply of the liquid F into the gap between the sliding surfaces can be ensured.

In addition, even when the gas A moves to the radially outer side beyond a liquid introduction groove 34 at low relative rotation speed, the gas A is collected in the circumferential groove portion 332, so that a state where the liquid F exists on the radially outer side with respect to the circumferential groove portion 332 between the sliding surfaces can be maintained.

Incidentally, in the third embodiment, the mode in which four communication groove portions 331 communicate with the circumferential groove portion 332 having an annular shape has been provided as an example; however, the communication groove portions communicating with the circumferential groove portion having an annular shape can be freely changed. For example, one or more communication groove portions may communicate with the circumferential groove portion having an annular shape.

### {Fourth embodiment}

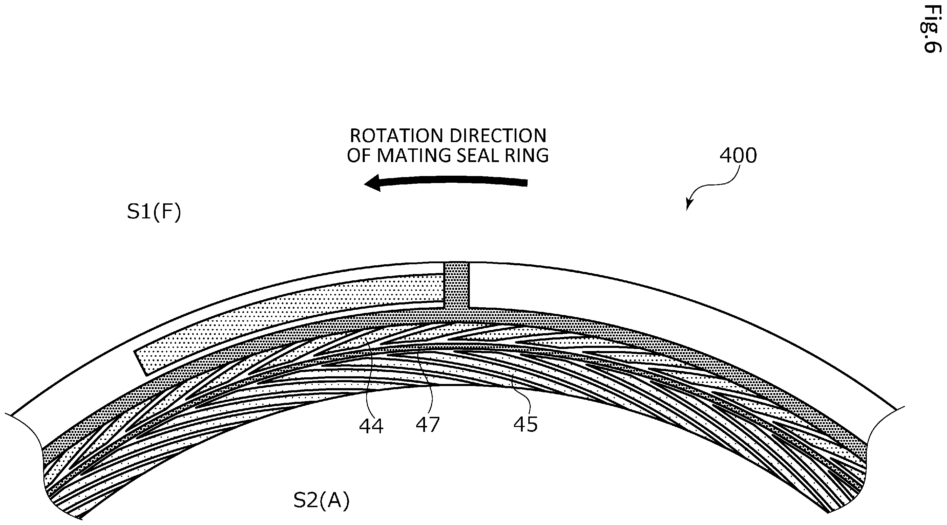

Next, a sliding component according to a fourth embodiment of the present invention will be described with reference to FIG. 6. Incidentally, the description of configurations that are the same as and overlap with the configurations of the third embodiment will be omitted.

As illustrated in FIG. 6, in a stationary seal ring 400 of the fourth embodiment, an annular groove 47 is formed between liquid introduction grooves 44 and dynamic pressure generation grooves 45. According to this configuration, since the liquid F introduced into a gap between sliding surfaces from the liquid introduction grooves 44 and the gas A introduced into the gap between the sliding surfaces from the dynamic pressure generation grooves 45 move along the annular groove 47, an interface between the liquid F and the gas A can be stabilized.

Incidentally, the groove provided between the liquid introduction grooves 44 and the dynamic pressure generation grooves 45 is not limited to the annular groove 47, and may be a groove having a substantially C shape or an arcuate shape. Furthermore, a plurality of the grooves may be concentrically provided.

### {Fifth embodiment}

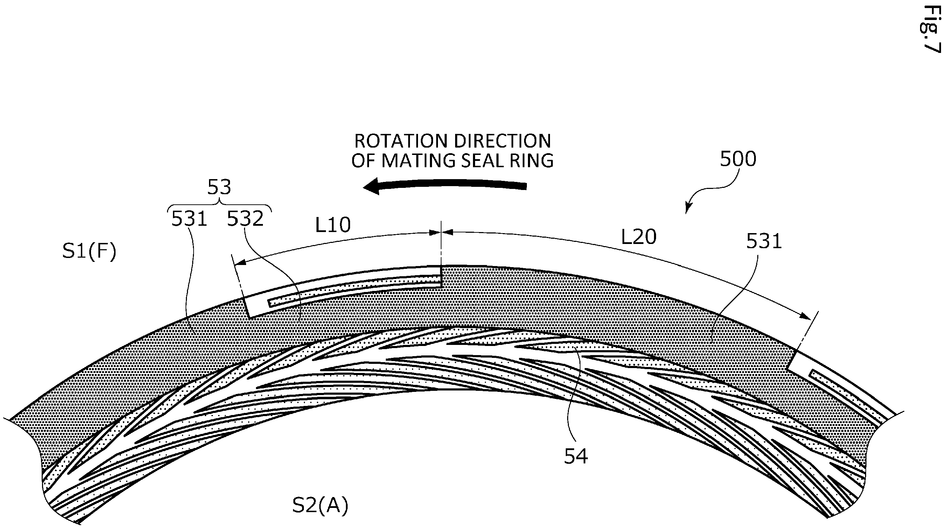

Next, a sliding component according to a fifth embodiment of the present invention will be described with reference to FIG. 7. Incidentally, the descriptions of configurations that are the same as and overlap with the configurations of the fourth embodiment will be omitted.

As illustrated in FIG. 7, in a stationary seal ring 500 of the fifth embodiment, a circumferential length L10 of a circumferential groove portion 532 of a deep groove 53 is smaller than a circumferential length L20 of a communication groove portion 531 (L10 < L20). In other words, a large region of the deep groove 53 is ensured. According to this configuration, the amount of the liquid F supplied into a gap between sliding surfaces or a liquid introduction groove 54 from the deep groove 53 at low relative rotation speed can be ensured.

### {Sixth embodiment}

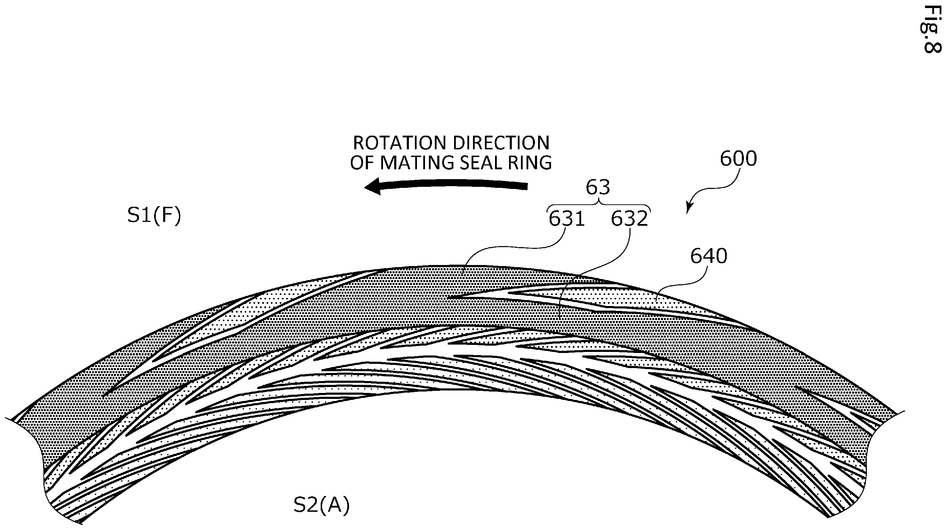

Next, a sliding component according to a sixth embodiment of the present invention will be described with reference to FIG. 8. Incidentally, the descriptions of configurations that are the same as and overlap with the configurations of the fifth embodiment will be omitted.

As illustrated in FIG. 8, in a stationary seal ring 600 of the sixth embodiment, a communication groove portion 631 of a deep groove 63 is inclined and extends counterclockwise from the outer space S1 in the radially inward direction. According to this configuration, the liquid can be smoothly introduced from the outer space S1 toward the circumferential groove portion 632 at low relative rotation speed.

In addition, the stationary seal ring 600 includes a spiral groove 640 as a specific dynamic pressure generation groove. The spiral groove 640 extends substantially parallel to the communication groove portion 631. According to this configuration, since the liquid F in the outer space S1 can be introduced to the radially inner side by the spiral groove 640, a large amount of the liquid F between the sliding surfaces can be ensured, and slidability can be improved.

### {Seventh embodiment}

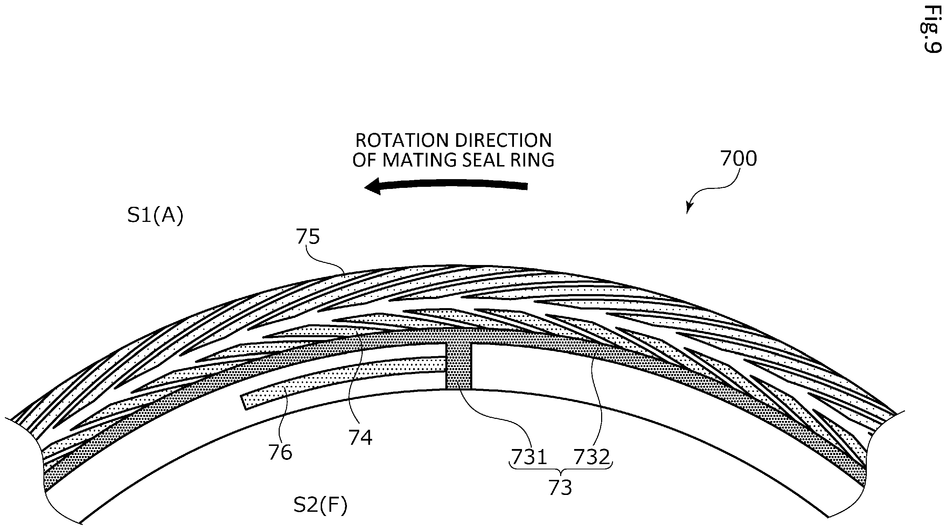

Next, a sliding component according to a seventh embodiment of the present invention will be described with reference to FIG. 9. Incidentally, the description of configurations that are the same as and overlap with the configurations of the second embodiment will be omitted.

As illustrated in FIG. 9, in a mechanical seal of the seventh embodiment, the liquid F exists in the inner space S2, and the gas A exists in the outer space S1. In a stationary seal ring 700, a communication groove portion 731 of a deep groove 73 communicates with the inner space S2.

A liquid introduction groove 74 extends in an arcuate shape from a circumferential groove portion 732 of the deep groove 73 toward the radially outer side while being inclined with a counterclockwise component.

A dynamic pressure generation groove 75 extends in an arcuate shape from the radially outer side toward the radially inner side while being inclined with a counterclockwise component. A radially outer end of the dynamic pressure generation groove 75 communicates with the outer space S1.

A Rayleigh step 76 extends concentrically with a sliding surface counterclockwise from the communication groove portion 731.

The embodiments of the present invention have been described above with reference to the drawings; however, the specific configurations are not limited to the embodiments, and changes or additions that are made without departing from the scope of the present invention are also included in the present invention.

For example, in the first to seventh embodiments, the mechanical seal has been described as an example of the sliding component; however, the sliding component may be a shaft sealing component other than the mechanical seal. Further, the sliding component may be, for example, a bearing component other than the shaft sealing component.

In addition, in the first to seventh embodiments, the example in which the deep grooves, the liquid introduction grooves, and the dynamic pressure generation grooves are provided on the stationary seal ring has been described; however, each groove may be provided on the rotating seal ring. In other words, the one sliding ring of the present invention may be the stationary seal ring or the rotating seal ring. In addition, the above-described grooves may be provided on both the stationary seal ring and the rotating seal ring. In addition, the sliding surfaces of a pair of sliding rings may include these grooves, for example, the deep grooves and the liquid introduction grooves may be provided on the sliding surface of one sliding ring, and the dynamic pressure generation grooves may be provided on the sliding surface of the other sliding ring.

In addition, in the first to seventh embodiments, the mode in which the liquid F exists in one of the outer space and the inner space and the gas A exists in the other has been provided as an example; however, the liquid F may exist in both the spaces, or the gas A may exist in both the spaces.

In addition, in the first to seventh embodiments, the gas A may be in the form of a mist that is a mixture of liquid and gas.

In addition, in the first to seventh embodiments, each bottom surface of the deep grooves, the liquid introduction grooves, and the dynamic pressure generation grooves extends parallel to the flat surfaces of the lands has been provided as an example; however, the present invention is not limited thereto, for example, the bottom surface of each groove may be inclined to become shallower as the bottom surface extends toward the downstream side of the relative rotation.

In the fourth to sixth embodiments, the mode in which the specific dynamic pressure generation grooves communicate with the liquid space has been provided as an example; however, the specific dynamic pressure generation grooves may not communicate with the liquid space. In addition, the specific dynamic pressure generation groove is not limited to a Rayleigh step or a spiral groove, and may be freely changed.

### {REFERENCE SIGNS LIST}

1 Rotating shaft
2 Sleeve
4 Housing
10 Stationary seal ring (one of sliding rings)
11 Sliding surface
12c Land
13 Deep groove
14 Liquid introduction groove
14A Closed end portion
15 Dynamic pressure generation groove
15A Closed end portion
16 Rayleigh step (specific dynamic pressure generation groove)
20 Rotating seal ring
21 Sliding surface
23 Deep groove
24 Liquid introduction groove
25 Dynamic pressure generation groove
33 Deep groove
34 Liquid introduction groove
43 Deep groove
44 Liquid introduction groove
53 Deep groove
63 Deep groove
73 Deep groove
74 Liquid introduction groove
75 Dynamic pressure generation groove
131 Communication groove portion (communication groove)
132 Circumferential groove portion (circumferential groove)
200 to 700 Stationary seal ring
640 Spiral groove (specific dynamic pressure generation groove)
A Gas (second fluid)
F Liquid (first fluid)
S1 Outer space (first fluid space)
S2 Inner space (second fluid space)

## Claims

1. A sliding component comprising a pair of sliding rings which rotate relative to each other, and which partition a first fluid space and a second fluid space off from each other,
wherein at least one of sliding surfaces of the pair of sliding rings include a specific dynamic pressure generation groove that is provided on a first fluid space side, and that generates a dynamic pressure using a first fluid,
a dynamic pressure generation groove that is provided on a second fluid space side with respect to the specific dynamic pressure generation groove, and that generates a dynamic pressure using a second fluid,
a communication groove communicating with the first fluid space,
a circumferential groove provided on the second fluid space side with respect to the specific dynamic pressure generation groove, and extending from the communication groove in a circumferential direction, and
a first fluid introduction groove that is provided on the second fluid space side with respect to the circumferential groove, and that introduces the first fluid.

2. The sliding component according to claim 1,
wherein the circumferential groove and the first fluid introduction groove communicate with each other.

3. The sliding component according to claim 1,
wherein the communication groove extends from the first fluid space toward the circumferential groove in a radial direction.

4. The sliding component according to claim 1,
wherein the communication groove is inclined and extends from the first fluid space toward the circumferential groove in a rotation direction.

5. The sliding component according to claim 1,
wherein an annular groove is formed between the first fluid introduction groove and the dynamic pressure generation groove.

6. The sliding component according to claim 1,
wherein the circumferential groove has an annular shape.

7. The sliding component according to claim 1,
wherein the first fluid introduction groove is a spiral groove.

8. The sliding component according to claim 7,
wherein the dynamic pressure generation groove is a spiral groove, and a closed end portion of the dynamic pressure generation groove and a closed end portion of the first fluid introduction groove face each other.

9. The sliding component according to any one of claims 1 to 8,
wherein the first fluid is a liquid, and the second fluid is a gas.
